# EUROPEAN PATENT APPLICATION

(11) **EP 3 366 508 A1**
(43) Date of publication of application: **29.08.2018**
(21) Application number: 18157839.4
(22) Date of filing: 21.02.2018
(51) Int. Cl.: B60L 11/12, B60L 11/14, B60L 15/20, B60K 6/20, B60W 20/16

(54) **HYBRID VEHICLE**

(30) Priority: 24.02.2017 JP 2017032882
(71) Applicant: Toyota Jidosha Kabushiki Kaisha, Aichi-Ken 471-8571 (JP)
(72) Inventor: HIGA, Mitsuaki, Toyota-Shi, Aichi-Ken, 471-8571 (JP); SUGAI, Shinichi, Toyota-Shi, Aichi-Ken, 471-8571 (JP); ITOYAMA, Daisuke, Toyota-Shi, Aichi-Ken, 471-8571 (JP); MIGITA, Tsubasa, Toyota-Shi, Aichi-Ken, 471-8571 (JP); MATSUMURA, Mitsuyori, Toyota-Shi, Aichi-Ken, 471-8571 (JP)
(74) Representative: Cabinet Beau de Loménie

(57) **Abstract**

A hybrid vehicle includes an engine in which a particulate matter removing filter configured to remove particulate matter is disposed in an exhaust system; a motor configured to receive and output power; a driving circuit configured to drive the motor; an electric power storage device that is connected to the driving circuit; and a control unit configured to control the engine and the driving circuit. The control unit is configured, when a high temperature request for increasing a temperature of the particulate matter removing filter to a prescribed value or higher is issued, to control the driving circuit such that a loss of the driving circuit increases and to control the engine such that power greater than power at a time when the high temperature request is not issued is output from the engine.

## Description

### 1. Field of the Invention

The invention relates to a hybrid vehicle, and more particularly, to a hybrid vehicle including an engine in which a particulate matter removing filter configured to remove particulate matter is provided in an exhaust system.

### 2. Description of Related Art

There has been proposed a hybrid vehicle which includes a filter configured to remove particulate matter in exhaust gas of an engine, and in which the engine and a motor are controlled such that a battery is warmed up when a temperature of the filter is increased to regenerate the filter and a battery temperature is lower than a reference value (for example, see Japanese Unexamined Patent Application Publication No 2015-174627 (JP 2015-174627 A)). In the hybrid vehicle, when the battery is warmed up, an output of the engine is increased and the motor is controlled such that charging power for the battery is increased.

### SUMMARY OF THE INVENTION

However, in the above-mentioned hybrid vehicle, since the charging power for the battery is increased by increasing the output of the engine, a state of charge (SOC) of the battery may be increased, and thus, charging of the battery may be limited, and as a result, the output of the engine may be also limited. In this case, it is difficult to increase the temperature of the particulate matter removing filter to a regenerable temperature. This decreases the opportunities to regenerate the filter.

The invention suppresses a decrease in opportunities to regenerate a particulate matter removing filter in a hybrid vehicle.

A hybrid vehicle according to an aspect of the invention includes an engine in which a particulate matter removing filter configured to remove particulate matter is disposed in an exhaust system; a motor configured to receive and output power; a driving circuit configured to drive the motor; an electric power storage device that is connected to the driving circuit; and a control unit configured to control the engine and the driving circuit. The control unit is configured, when a high temperature request for increasing a temperature of the particulate matter removing filter to a prescribed value or higher is issued, to control the driving circuit such that a loss of the driving circuit increases and to control the engine such that power greater than power at a time when the high temperature request is not issued is output from the engine.

In the hybrid vehicle according to the aspect, when the high temperature request for increasing the temperature of the particulate matter removing filter configured to remove particulate matter in the exhaust system of the engine to the prescribed value or higher is issued (in other words, when the high temperature request for increasing the temperature of the particulate matter removing filter to a high-temperature state equal to or higher than the prescribed value), the driving circuit is controlled such that the loss of the driving circuit configured to drive the motor is increased, and the engine is controlled such that power greater than power at the time when the high temperature request is not issued is output from the engine. Even when the engine is controlled such that power greater than the power at the time when the high temperature request is not issued is output from the engine, since the driving circuit is controlled such that the loss of the driving circuit configured to drive the motor increases, it is possible to decrease charging power for the electric power storage device as compared to a case where the driving circuit is not controlled such that the loss of the driving circuit is increased. Accordingly, it is possible to suppress occurrence of a situation where the output of the engine starts to be limited due to start of limitation on charging due to an increase in the state of charge (SOC) of the electric power storage device. As a result, it is possible to suppress a decrease in opportunities to regenerate the particulate matter removing filter.

As the technique of increasing the loss of the driving circuit, a carrier frequency of an inverter may be increased when the driving circuit includes the inverter, and a carrier frequency of a boost circuit may be increased when the driving circuit includes the boost circuit configured to increase a voltage of electric power from the electric power storage device. When the driving circuit includes a boost circuit configured to increase a voltage of electric power from the electric power storage device, a target voltage at a high voltage side of the boost circuit may be increased.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a diagram schematically illustrating a configuration of a hybrid vehicle according to a first embodiment of the invention;
FIG. 2 is a diagram schematically illustrating a configuration of an electrical system including motors;
FIG. 3 is a flowchart illustrating an example of an engine command calculating routine which is performed by an HVECU;
FIG. 4 is a diagram illustrating an example of a relationship between a carrier frequency and a loss;
FIG. 5 is a flowchart illustrating an example of an engine command calculating routine which is performed by an HVECU according to a second embodiment; and
FIG. 6 is a diagram schematically illustrating a configuration of a hybrid vehicle according to a modified example.

### DETAILED DESCRIPTION OF EMBODIMENTS

Hereinafter, an aspect of the invention will be described in conjunction with embodiments.

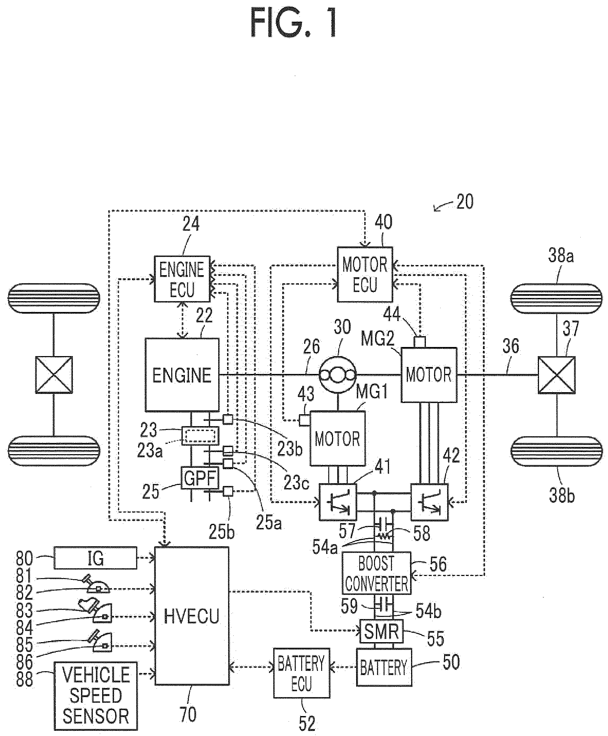

FIG. 1 is a diagram schematically illustrating a configuration of a hybrid vehicle 20 according to a first embodiment of the invention. As illustrated in the drawing, the hybrid vehicle 20 according to the embodiment includes an engine 22, an engine electronic control unit (hereinafter referred to as an engine ECU) 24, a planetary gear 30, a motor MG1, a motor MG2, inverters 41 and 42, a motor electronic control unit (hereinafter referred to as a motor ECU) 40, a battery 50, a battery electronic control unit (hereinafter referred to as a battery ECU) 52, a boost converter 56, and a hybrid electronic control unit (hereinafter referred to as an "HVECU") 70.

The engine 22 is configured as an internal combustion engine that outputs power using gasoline, light oil, or the like as fuel. Operation of the engine 22 is controlled by the engine ECU 24. An exhaust gas control device 23 and a particulate matter removing filter (hereinafter referred to as a "PM filter") 25 are attached to an exhaust system of the engine 22. In the exhaust gas control device 23, a catalyst 23a is provided. The catalyst 23a removes unburned fuel or nitrogen oxides in exhaust gas. The PM filter 25 is formed as a porous filter, using ceramics, stainless steel, or the like. The PM filter 25 captures particulate matter (PM) such as soot.

The engine ECU 24 is configured as a microprocessor including a CPU as a main unit, which is not illustrated. The engine ECU 24 includes a ROM that stores processing programs, a RAM that temporarily stores data, input/output ports, and a communication port in addition to the CPU. Signals from various sensors necessary for operating the engine 22 are input to the engine ECU 24 via the input port. Examples of the signals from various sensors include a signal indicative of a crank position from a crank position sensor (not illustrated) that detects a rotational position of a crank shaft 26, and a signal indicative of a coolant temperature Tw from a coolant temperature sensor (not illustrated) that detects a temperature of a coolant of the engine 22. Examples of the signals from various sensors also include a signal indicative of a throttle valve opening degree TH from a throttle valve position sensor (not illustrated) that detects a position of a throttle valve, a signal indicative of an amount of intake air Qa from an air flowmeter (not illustrated) that is attached to an intake pipe, and a signal indicative of an intake air temperature Ta from a temperature sensor (not illustrated) that is attached to the intake pipe. Examples of the signals from various sensors also include a signal indicative of an air-fuel ratio AF from an air-fuel ratio sensor 23b that is attached to a part upstream of the exhaust gas control device 23 of the exhaust system, an oxygen signal O2 from an oxygen sensor 23c that is attached to a part downstream of the exhaust gas control device 23, and signals indicative of pressures P1 and P2 from pressure sensors 25a and 25b that are attached to parts upstream and downstream of the PM filter 25 in the exhaust system. Various control signals for controlling the operation of the engine 22 are output from the engine ECU 24 via the output port. Examples of the various signals include a drive signal for a fuel injection valve, a drive signal for a throttle motor that adjusts the position of the throttle valve, and a control signal for an ignition coil which is integrated with an igniter. The engine ECU 24 is connected to the HVECU 70 via the communication port. The engine ECU 24 controls the operation of the engine 22 in accordance with a control signal from the HVECU 70. The engine ECU 24 outputs data on an operating state of the engine 22 to the HVECU 70 when necessary. The engine ECU 24 calculates a rotation speed of the crank shaft 26, that is, a rotation speed Ne of the engine 22, based on a crank angle θcr. The engine ECU 24 also calculates a volumetric efficiency (a ratio of a volume of actual intake air in one cycle to a stroke volume per cycle of the engine 22) KL based on the amount of intake air Qa from the air flow meter and the rotation speed Ne of the engine 22. In addition, the engine ECU 24 calculates an amount Qpm of deposited PM which is an estimated amount of particulate matter deposited on the PM filter 25 based on a pressure difference ΔP (ΔP = P1 - P2) between the pressures P1 and P2 from the pressure sensors 25a and 25b, and calculates a filter temperature Tf which is an estimated temperature of the PM filter 25 based on the operating state of the engine 22. The filter temperature Tf may be estimated with reference to a map in which a relationship between an operating point of the engine 22 and the filter temperature Tf is defined, may be estimated based on a vehicle speed, an atmospheric pressure, correction thereof depending on an engine operation control type, operation history information, and the like, or may be estimated based on a detection value of a temperature sensor that is attached to the PM filter 25.

The planetary gear 30 is configured as a single pinion type planetary gear mechanism. A rotor of the motor MG1, a drive shaft 36 connected to driving wheels 38a and 38b via a differential gear 37, and the crank shaft 26 of the engine 22 are connected to a sun gear, a ring gear, and a carrier of the planetary gear 30, respectively.

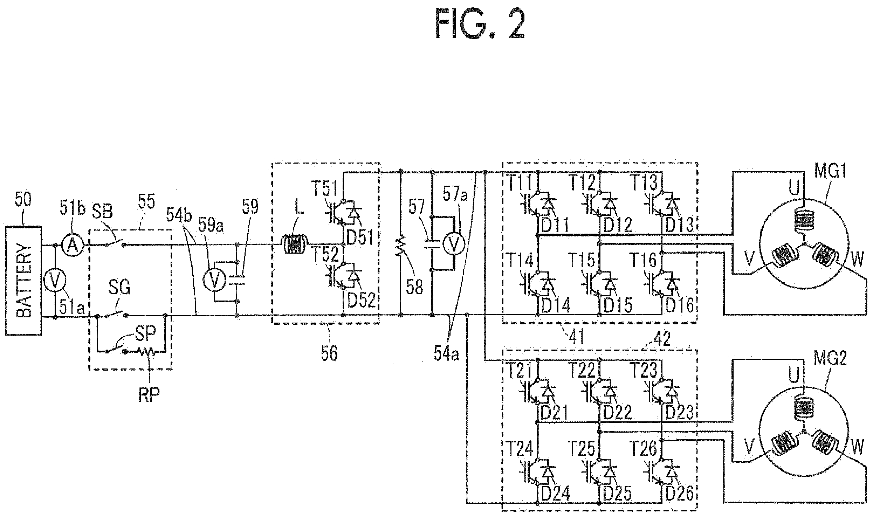

The motor MG1 is configured as a known synchronous generator motor including a rotor in which a permanent magnet is embedded and a stator on which three-phase coils are wound, and the rotor is connected to the sun gear of the planetary gear 30 as described above. Similarly to the motor MG1, the motor MG2 is configured as a synchronous generator motor and a rotor thereof is connected to the drive shaft 36. The motors MG1 and MG2 are driven by causing the motor ECU 40 to control the inverters 41 and 42. The inverters 41 and 42 are connected to the boost converter 56 via a power line (hereinafter referred to as a drive voltage system power line) 54a. The boost converter 56 is connected to a power line (hereinafter referred to as a battery voltage system power line) 54b connected to the battery 50 and a system main relay 55. As illustrated in FIG. 2, each of the inverters 41 and 42 includes six transistors T11 to T16 or T21 to T26 and six diodes D11 to D16 or D21 to D26 connected in parallel to the transistors T11 to T16 or T21 to T26 such that a rectification direction is reversed. The transistors T11 to T16 are arranged to form pairs to serve as a source side and a sink side with respect to a positive electrode bus bar and a negative electrode bus bar of the drive voltage system power line 54a. The transistors T21 to T26 are arranged to form pairs to serve as a source side and a sink side with respect to the positive electrode bus bar and the negative electrode bus bar of the drive voltage system power line 54a. Three-phase coils (U-phase, V-phase, and W-phase) of the motors MG1 and MG2 are connected to connection points between the transistors forming the pairs. Accordingly, by adjusting ratios of ON times of the transistors T11 to T16 and T21 to T26 forming the pairs in a state in which a voltage is applied to the inverters 41 and 42, it is possible to form a rotating magnetic field in the three-phase coils and to rotationally drive the motors MG1 and MG2. Since the inverters 41 and 42 share the positive electrode bus bar and the negative electrode bus bar of the drive voltage system power line 54a, electric power which is generated by one of the motors MG1 and MG2 can be supplied to the other motor.

As illustrated in FIG. 2, the boost converter 56 is configured as a boost converter including two transistors T51 and T52, two diodes D51 and D52 that are connected in parallel to the transistors T51 and T52 such that the rectification direction is reversed, and a reactor L. The two transistors T51 and T52 are connected to the positive electrode bus bar of the drive voltage system power line 54a and the negative electrode bus bars of the drive voltage system power line 54a and the battery voltage system power line 54b, and the reactor L is connected to a connection point between the transistors T51 and T52 and the positive electrode bus bar of the battery voltage system power line 54b. Accordingly, by turning on and off the transistors T51 and T52, electric power of the battery voltage system power line 54b can be stepped up and supplied to the drive voltage system power line 54a or electric power of the drive voltage system power line 54a can be stepped down and supplied to the battery voltage system power line 54b.

A smoothing capacitor 57 for smoothing and a discharging resistor 58 for discharging are connected in parallel to the drive voltage system power line 54a. A system main relay 55 including a positive electrode-side relay SB, a negative electrode-side relay SG, a precharging relay SP, and a precharging resistor RP is attached to an output terminal side of the battery 50 in the battery voltage system power line 54b, and a smoothing filter capacitor 59 is connected to the boost converter 56-side of the battery voltage system power line 54b.

The motor ECU 40 is configured as a microprocessor including a CPU as a main unit, which is not illustrated. The motor ECU 40 includes a ROM that stores processing programs, a RAM that temporarily stores data, input/output ports, and a communication port in addition to the CPU. The motor ECU 40 receives, via the input port, signals necessary for controlling driving of the motors MG1 and MG2, for example, signals indicative of rotational positions θm1 and θm2 from rotational position sensors 43 and 44 that detect rotational positions of the rotors of the motors MG1 and MG2 and signals indicative of phase currents which are applied to the motors MG1 and MG2 and which are detected by current sensors (not illustrated). The motor ECU 40 also receives, for example, a signal indicative of a voltage VH of the smoothing capacitor 57 (a voltage of the drive voltage system power line 54a, which is hereinafter referred to as a drive voltage system voltage) from a voltage sensor 57a attached between the terminals of the smoothing capacitor 57, and a signal indicative of a voltage VL of the filter capacitor 59 (a voltage of the battery voltage system power line 54b, which is hereinafter referred to as a battery voltage system voltage) from a voltage sensor 59a attached between the terminals of the filter capacitor 59. The motor ECU 40 also receives, for example, signals indicative of element temperatures Tinv and Tcon of the transistors T11 to T16 and T21 to T26 of the inverters 41 and 42 and the transistors T51 and T52 of the boost converter 56 from temperature sensors (not illustrated) attached to the inverters 41 and 42 and the boost converter 56. The motor ECU 40 outputs, via the output port, control signals for driving the inverters 41 and 42 and the boost converter 56, for example, switching control signals for the transistors T11 to T16 and T21 to T26 of the inverters 41 and 42, a frequency adjustment signal for adjusting a carrier frequency of the inverters 41 and 42, switching control signals for the transistors T51 and T52 of the boost converter 56, and a frequency adjustment signal for adjusting a carrier frequency of the boost converter 56. The motor ECU 40 communicates with the HVECU 70, controls driving of the motors MG1 and MG2 in accordance with a control signal from the HVECU 70, and outputs data on operating states of the motors MG1 and MG2 to the HVECU 70 when necessary. The motor ECU 40 calculates the rotation speeds Nm1 and Nm2 of the motors MG1 and MG2 based on the rotational positions θm1 and θm2 of the rotors of the motors MG1 and MG2 from the rotational position sensors 43 and 44.

The battery 50 is configured as, for example, a lithium-ion secondary battery, and supplies and receives electric power to and from the motors MG1 and MG2 via the inverters 41 and 42. The battery ECU 52 that controls the battery 50 is configured as a microprocessor including a CPU as a main unit, which is not illustrated. The battery ECU 52 includes a ROM that stores processing programs, a RAM that temporarily stores data, input/output ports, and a communication port in addition to the CPU. The battery ECU 52 receives, via the input port, signals necessary for controlling the battery 50, for example, a signal indicative of a battery voltage Vb from a voltage sensor 51a that is installed between the terminals of the battery 50, a signal indicative of a battery current Ib from a current sensor 51b that is attached to the power line connected to the output terminal of the battery 50, and a signal indicative of a battery temperature Tb from a temperature sensor (not illustrated) that is attached to the battery 50. The battery ECU 52 communicates with the HVECU 70 and transmits data on the state of the battery 50 to the HVECU 70 by communication when necessary. In order to control the battery 50, the battery ECU 52 calculates a state of charge SOC, which is a ratio of a dischargeable power capacity of the battery 50 to a full capacity of the battery 50 at the present time, based on an integrated value of the charging/discharging current Ib detected by the current sensor, and calculates input and output power limits Win and Wout which are maximum power values with which the battery 50 can be charged/discharged, based on the calculated state of charge SOC and the battery temperature Tb.

The HVECU 70 is configured as a microprocessor including a CPU as a main unit, which is not illustrated. The HVECU 70 includes a ROM that stores processing programs, a RAM that temporarily stores data, input/output ports, and a communication port in addition to the CPU. The HVECU 70 receives, via the input port, various signals necessary for driving control and the like, for example, an ignition signal from an ignition switch 80 and a signal indicative of a vehicle speed V from a vehicle speed sensor 88. The HVECU 70 also receives a signal indicative of a shift position SP from a shift position sensor 82 that detects an operation position of a shift lever 81, a signal indicative of an accelerator operation amount Acc from an accelerator pedal position sensor 84 that detects an amount of depression of an accelerator pedal 83, and a signal indicative of a brake pedal position BP from a brake pedal position sensor 86 that detects an amount of depression of a brake pedal 85. A control signal such as a driving signal for the system main relay 55 is output from the HVECU 70 via the output port. As described above, the HVECU 70 is connected to the engine ECU 24, the motor ECU 40, and the battery ECU 52 via the communication port, and transmits and receives various control signals or data to and from the engine ECU 24, the motor ECU 40, and the battery ECU 52.

The hybrid vehicle 20 according to the embodiment having the above-mentioned configuration travels in a hybrid traveling mode (an HV traveling mode) or an electric motor traveling mode (an EV traveling mode). The HV traveling mode is a mode in which the vehicle travels with operation of the engine 22, that is, a mode in which the vehicle travels while the engine 22 is operating. The EV traveling mode is a mode in which the vehicle travels without using the operation of the engine 22.

When the hybrid vehicle travels in the HV traveling mode, the HVECU 70 first sets a required torque Tr* which is required for travelling (i.e., which is to be output to the drive shaft 36) based on the accelerator operation amount Acc from the accelerator pedal position sensor 84 and the vehicle speed V from the vehicle speed sensor 88. Subsequently, the HVECU 70 calculates traveling power Pdrv* which is required for traveling by multiplying the set required torque Tr* by a rotation speed Nr of the drive shaft 36. Here, the rotation speed Nm2 of the motor MG2 or a rotation speed obtained by multiplying the vehicle speed V by a conversion factor can be used as the rotation speed Nr of the drive shaft 36. The HVECU 70 sets required power Pe* required for the vehicle by adding required charging/discharging power Pb* (which has a positive value when electric power is discharged from the battery 50) of the battery 50, air-conditioning power Pac for performing air-conditioning of an occupant compartment, and auxiliary machinery power consumption Ph that is consumed in auxiliary machinery to the calculated traveling power Pdrv*. Here, the required charging/discharging power Pb* is set such that the absolute value of a difference ΔSOC between the state of charge SOC of the battery 50 and a target state of charge SOC* decreases, based on the difference ΔSOC. Power that is consumed in an air conditioner (not illustrated) at the present time is used as the air-conditioning power Pac. Power that is consumed in the auxiliary machinery (not illustrated) at the present time is used as the auxiliary machinery power consumption Ph. Then, a target operating point (a target rotation speed Ne*, a target torque Te*) of the engine 22 and torque commands Tm1* and Tm2* for the motors MG1 and MG2 are set such that the required power Pe* is output from the engine 22 and the required torque Tr* is output to the drive shaft 36. The target operating point (the target rotation speed Ne*, the target torque Te*) of the engine 22 is set by determining in advance an optimal operation line in which a fuel efficiency is optimized in consideration of noise, vibration, and the like, among operating points (rotation speeds, torques) of the engine 22, and acquiring an operating point (a rotation speed, a torque) on the optimal operation line corresponding to the required power Pe*. The target operating point (the target rotation speed Ne*, the target torque Te*) of the engine 22 is transmitted to the engine ECU 24. The torque commands Tm1* and Tm2* for the motors MG1 and MG2 are transmitted to the motor ECU 40. The engine ECU 24 performs control of an amount of intake air of the engine 22, fuel injection control, ignition control, and the like such that the engine 22 operates based on the target operating point. The motor ECU 40 performs switching control for the transistors of the boost converter 56 and the inverters 41 and 42, and controls the carrier frequency of the boost converter 56 and the carrier frequency of the inverters 41 and 42 such that the motors MG1 and MG2 are driven in accordance with the torque commands Tm1* and Tm2*.

When the hybrid vehicle travels in the EV traveling mode, the HVECU 70 first sets the required torque Tr* based on the accelerator operation amount Acc from the accelerator pedal position sensor 84 and the vehicle speed V from the vehicle speed sensor 88 and calculates the traveling power Pdrv* by multiplying the required torque Tr* by the rotation speed Nr of the drive shaft 36. Subsequently, the HVECU 70 sets the torque command Tm1* for the motor MG1 to a value of zero and sets the torque command Tm2* for the motor MG2 such that the required torque Tr* (the traveling power Pdrv*) is output to the drive shaft 36. The torque commands Tm1* and Tm2* for the motors MG1 and MG2 are transmitted to the motor ECU 40. The motor ECU 40 controls the boost converter 56 and the inverters 41 and 42 as described above.

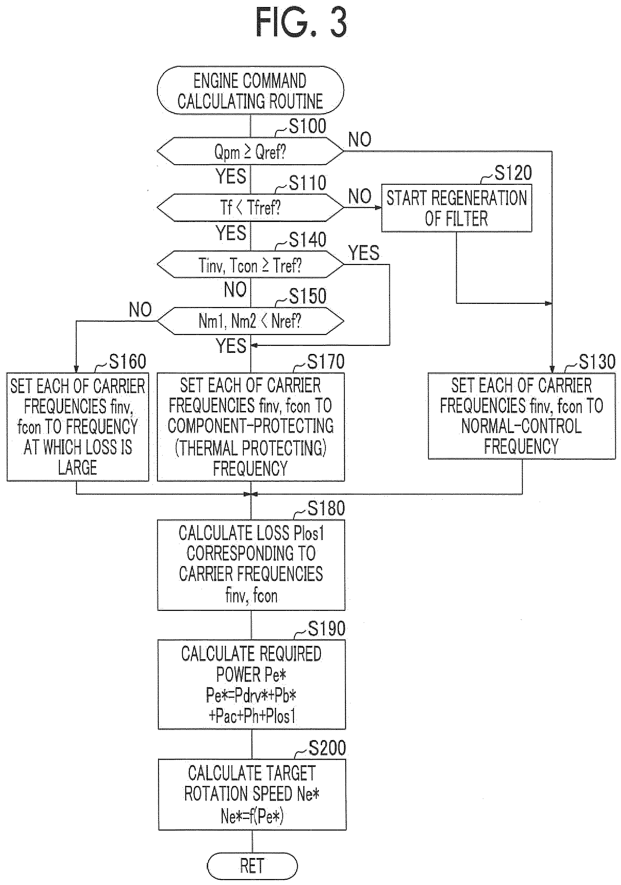

The operation of the hybrid vehicle 20 according to the first embodiment having the above-mentioned configuration, particularly, the operation when the temperature of the PM filter 25 is increased to regenerate the PM filter 25 in which particulate matter (PM) has been deposited, will be described below. Regeneration of the PM filter 25 is performed when an amount Qpm of deposited PM which is estimated based on the pressure difference ΔP (ΔP = P1 - P2) between the pressures P1 and P2 from the pressure sensors 25a and 25b is equal to or greater than a prescribed amount Qref of deposited PM and a regeneration request is transmitted from the engine ECU 24. The regeneration of the PM filter 25 is performed by increasing the temperature of the PM filter 25 to a regenerable temperature Tfref (for example, 600°C) or higher, operating the engine 22 with an air-fuel ratio in a lean state (a state in which an amount of fuel is less than that at a stoichiometric air-fuel ratio) or rotating the engine 22 in a state in which fuel injection is stopped in this temperature state, and thus supplying air (oxygen) to the PM filter 25 to combust (bum) the particulate matter deposited in the PM filter 25. When the temperature of the PM filter 25 is increased to the regenerable temperature or higher, the HVECU 70 performs an engine command calculating routine which is illustrated in FIG. 3 in order to rapidly increase the temperature to perform regeneration of the PM filter 25. This routine is repeatedly performed at prescribed time intervals (for example, several tens of msec).

When the engine command calculating routine is performed, the HVECU 70 first determines whether the estimated amount Qpm of deposited PM of the PM filter 25 is equal to or greater than a prescribed amount Qref of deposited PM (Step S100). When it is determined that the amount Qpm of deposited PM is less than the prescribed amount Qref of deposited PM, the HVECU 70 determines that it is not necessary to perform a regeneration process for the PM filter 25 and sets each of the carrier frequency finv of the inverters 41 and 42 and the carrier frequency fcon of the boost converter 56 to a frequency that is normally used (i.e., a normal-control frequency) (Step S130). The carrier frequency finv of the inverters 41 and 42 is set to increase as the rotation speeds Nm1 and Nm2 of the motors MG1 and MG2 increase, and is set to increase as the absolute values of the torque commands Tm1* and Tm2* for the motors MG1 and MG2 increase. The carrier frequency fcon of the boost converter 56 is set to increase as the absolute values of the torque commands Tm1* and Tm2* for the motors MG1 and MG2 increase, and is set to increase as a target voltage VH* of the drive voltage system power line 54a increases.

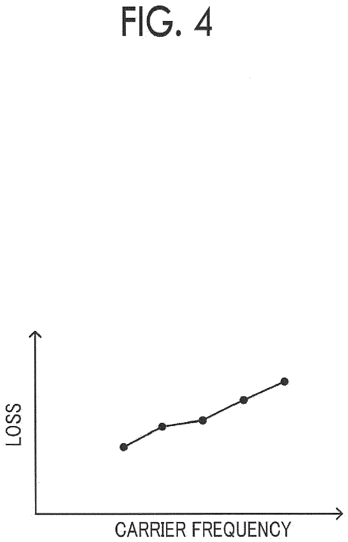

After the carrier frequency finv of the inverters 41 and 42 and the carrier frequency fcon of the boost converter 56 are set, a loss Plos1 corresponding to the carrier frequencies finv and fcon is calculated (Step S180). The loss Plos1 is determined by the inverters 41 and 42 and the boost converter 56, and increases as the carrier frequencies finv and fcon increase. In the first embodiment, a relationship between the carrier frequency finv and a loss Pinv and a relationship between the carrier frequency fcon and a loss Pcon are acquired in advance, are stored in a loss setting map, the corresponding losses Pinv and Pcon are derived from the map when the carrier frequencies finv and fcon are given, and the loss Plosl (Plos1 = Pinv + Peon) is calculated as a sum thereof. Here, the loss Pinv is a loss of the inverters 41 and 42 at the carrier frequency finv, and the loss Pcon is a loss of the boost converter 56 at the carrier frequency fcon. An example of a relationship between the carrier frequency and the loss is illustrated in FIG. 4. As illustrated in the drawing, the loss increases as the carrier frequency increases.

Subsequently, the required power Pe* is set as a sum of the traveling power Pdrv*, the required charging/discharging power Pb*, the air-conditioning power Pac, and the auxiliary machinery power consumption Ph, and the loss Plos1 (Step S190), the target rotation speed Ne* of the engine 22 as an engine command is set based on the required power Pe* and the optimal operation line (Step S200), and then the routine ends. The target rotation speed Ne* of the engine 22 is transmitted to the engine ECU 24 as described above.

When it is determined in Step S100 that the estimated amount Qpm of deposited PM of the PM filter 25 is equal to or greater than the prescribed amount Qref of deposited PM, it is determined whether the filter temperature Tf which is an estimated temperature of the PM filter 25 is lower than the regenerable temperature Tfref (Step S110). When it is determined that the filter temperature Tf is equal to or higher than the regenerable temperature Tfref, a process of regenerating the PM filter 25 is started (Step S120), the carrier frequency finv of the inverters 41 and 42 and the carrier frequency fcon of the boost converter 56 are each set to a frequency that is normally used (Step S130), the processes of Steps S180 to S200 are performed, and then the routine ends. The process of regenerating the PM filter 25 is the same as that described above.

When it is determined in Step S110 that the filter temperature Tf is lower than the regenerable temperature Tfref, it is determined whether the element temperature Tinv of the inverters 41 and 42 and the element temperature Tcon of the boost converter 56 are equal to or higher than a temperature threshold value Ttref (Step S140), and it is determined whether the rotation speeds Nm1 and Nm2 of the motors MG1 and MG2 are less than a rotation speed threshold value Nref (Step S150). Here, the temperature threshold value Ttref may be lower than a temperature at which a limitation is imposed on the operation of the motor, and may be a relatively high temperature as an element temperature. The rotation speed threshold value Nref may be a rotation speed of which the absolute value is relatively low, and for example, about 10% of an allowable maximum rotation speed may be used as the rotation speed threshold value Nref.

When it is determined in Step S140 that the element temperature Tinv of the inverters 41 and 42 and the element temperature Tcon of the boost converter 56 are equal to or higher than the temperature threshold value Ttref, or when it is determined in Step S140 that the element temperature Tinv of the inverters 41 and 42 and the element temperature Tcon of the boost converter 56 are lower than the temperature threshold value Ttref and it is determined in Step S150 that the rotation speeds Nm1 and Nm2 of the motors MG1 and MG2 are lower than the rotation speed threshold value Nref, the carrier frequency finv of the inverters 41 and 42 and the carrier frequency fcon of the boost converter 56 are each set to a component-protecting frequency at which overheating is not caused, so as to protect components (Step S170), the processes of Steps S180 to S200 are performed, and then the routine ends. The component-protecting frequency is a low frequency within a range in which the inverters 41 and 42 and the boost converter 56 can operate normally. When the amount Qpm of deposited PM becomes equal to or greater than the prescribed amount Qref of deposited PM and thus a regeneration request for the PM filter 25 is transmitted from the engine ECU 24, the engine ECU 24 performs dither control of operating the engine 22 by performing injection of fuel such that a rich state (a state in which an amount of fuel is less than that at the stoichiometric air-fuel ratio) and a lean state of the air-fuel ratio of the engine 22 are repeated, thereby rapidly increasing the temperature of the PM filter 25.

When it is determined in Step S140 that the element temperature Tinv of the inverters 41 and 42 and the element temperature Tcon of the boost converter 56 are lower than the temperature threshold value Ttref and it is determined in Step S150 that the rotation speeds Nm1 and Nm2 of the motors MG1 and MG2 are equal to or higher than the rotation speed threshold value Nref, the carrier frequency finv of the inverters 41 and 42 and the carrier frequency fcon of the boost converter 56 are each set to a frequency corresponding to a greater loss than a loss corresponding to the frequency that is normally used (Step S160), the processes of Steps S180 to S200 are performed, and then the routine ends. As described above, since the loss increases as the carrier frequency increases, the process of Step S160 is a process of setting each of the carrier frequency finv of the inverters 41 and 42 and the carrier frequency fcon of the boost converter 56 to a frequency higher than a frequency that is normally used. Accordingly, since the loss Plos1 calculated in Step S180 is set to a greater value than that in the normal state, the required power Pe* that should be output from the engine 22 is set to a larger value. By increasing the power to be output from the engine 22, it is possible to rapidly increase the temperature of the PM filter 25. In this case, since the battery 50 is charged/discharged with the required charging/discharging power Pb* based on the difference ΔSOC between the state of charge SOC and the target state of charge SOC* of the battery 50, the battery 50 is not excessively charged. Accordingly, it is possible to suppress occurrence of a situation where the output of the engine 22 is limited due to a decrease in the input power limit Win of the battery 50 caused by an increase in the state of charge SOC of the battery 50.

In the above-mentioned hybrid vehicle 20 according to the first embodiment, in a case where the amount Qpm of deposited PM is equal to or greater than the prescribed amount Qref of deposited PM and the temperature Tf of the PM filter 25 is lower than the regenerable temperature Tfref, when the element temperature Tinv of the inverters 41 and 42 and the element temperature Icon of the boost converter 56 are lower than the temperature threshold value Ttref and the rotation speeds Nm1 and Nm2 of the motors MG1 and MG2 are equal to or higher than the rotation speed threshold value Nref, the carrier frequency finv of the inverters 41 and 42 and the carrier frequency fcon of the boost converter 56 are each set to a frequency corresponding to a greater loss than a loss corresponding to the frequency that is normally used. Then, the loss Plos1 corresponding to the carrier frequencies finv and fcon is calculated, and the loss Plos1 is added to calculate the required power Pe* that should be output from the engine 22. Accordingly, the required power Pe* that should be output from the engine 22 can be set to be greater than that in a normal state, and thus, the temperature of the PM filter 25 can be rapidly increased. Further, since the battery 50 is charged/discharged with the required charging/discharging power Pb* based on the state of charge SOC, the battery 50 is not excessively charged. Accordingly, it is possible to suppress occurrence of a situation where the output of the engine 22 is limited due to a decrease in the input power limit Win of the battery 50 caused by an increase in the state of charge SOC of the battery 50. As a result, it is possible to suppress a decrease in opportunities to regenerate the PM filter 25.

In the hybrid vehicle 20 according to the first embodiment, when the amount Qpm of deposited PM is equal to or greater than the prescribed amount Qref of deposited PM and the temperature Tf of the PM filter 25 is lower than the regenerable temperature Tfref, the carrier frequency finv of the inverters 41 and 42 and the carrier frequency fcon of the boost converter 56 are each set to a frequency corresponding to a greater loss than a loss corresponding to the frequency that is normally used, and the loss Plos1 corresponding to the carrier frequencies finv and fcon is added to calculate the required power Pe* that should be output from the engine 22. However, the required power Pe* may be further increased. In this case, the battery 50 is charged with excessive power, but charging power becomes less than that at a time when the carrier frequency finv of the inverters 41 and 42 and the carrier frequency fcon of the boost converter 56 are each set to a frequency that is normally used (i.e., charging power becomes less than that in a normal state). Accordingly, since the state of charge SOC of the battery 50 increases more slowly than in the normal state, the input power limit Win of the battery 50 decreases more slowly, and thus, limiting of the output of the engine 22 can be more delayed. As a result, it is possible to suppress a decrease in opportunities to regenerate the PM filter 25.

In the hybrid vehicle 20 according to the first embodiment, in Step S110, it is determined whether the filter temperature Tf is lower than the regenerable temperature Tfref. However, it may be determined whether the filter temperature Tf is estimated to be lower than the regenerable temperature Tfref. In this case, even if the filter temperature Tf is currently equal to or higher than the regenerable temperature Tfref, the state in which the filter temperature Tf is equal to or higher than the regenerable temperature Tfref can be maintained.

In the hybrid vehicle 20 according to the first embodiment, the boost converter 56 is provided. However, the boost converter 56 may not be provided. In this case, when the amount Qpm of deposited PM is equal to or greater than the prescribed amount Qref of deposited PM and the temperature Tf of the PM filter 25 is lower than the regenerable temperature Tfref, the carrier frequency finv of the inverters 41 and 42 may be set to a frequency corresponding to a greater loss than a loss corresponding to a frequency that is normally used. Further, in the case where the boost converter 56 is provided, when the amount Qpm of deposited PM is equal to or greater than the prescribed amount Qref of deposited PM and the temperature Tf of the PM filter 25 is lower than the regenerable temperature Tfref, one of the carrier frequency finv of the inverters 41 and 42 and the carrier frequency fcon of the boost converter 56 may be set to a frequency corresponding to a greater loss than a loss corresponding to a frequency that is normally used.

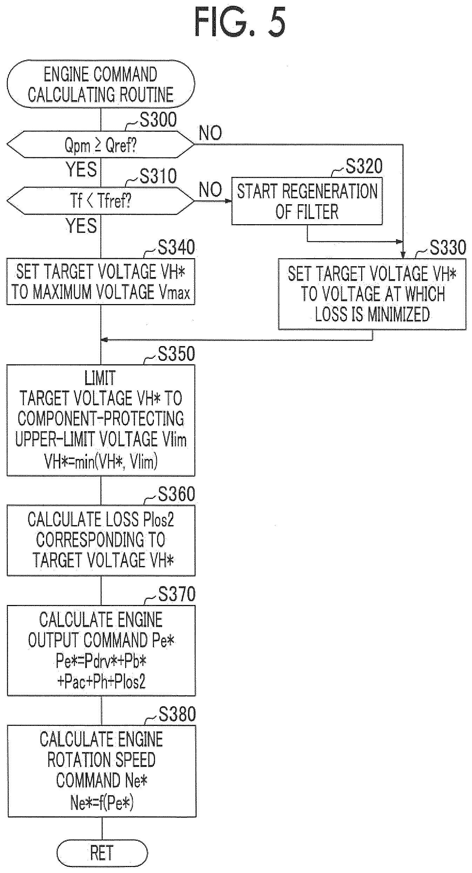

A hybrid vehicle 120 according to a second embodiment will be described below. The hybrid vehicle 120 according to the second embodiment has the same hardware configuration as that of the hybrid vehicle 20 according to the first embodiment illustrated in FIGS. 1 and 2. Accordingly, in order to avoid repeated description, components of the hybrid vehicle 120 according to the second embodiment will be denoted by the same reference signs as in the hybrid vehicle 20 according to the first embodiment and illustration and description thereof will be omitted. In the hybrid vehicle 120 according to the second embodiment, when the temperature of the PM filter 25 is increased to the regenerable temperature or higher, the HVECU 70 performs an engine command calculating routine which is illustrated in FIG. 5 in order to rapidly increase the temperature to perform regeneration of the PM filter 25.

When the engine command calculating routine is performed, the HVECU 70 first determines whether the estimated amount Qpm of deposited PM of the PM filter 25 is equal to or greater than a prescribed amount Qref of deposited PM (Step S300). When it is determined that the amount Qpm of deposited PM is less than the prescribed amount Qref of deposited PM, the HVECU 70 determines that it is not necessary to perform a regeneration process for the PM filter 25 and sets a target voltage VH* which is a target value of the voltage of the drive voltage system power line 54a such that the loss is minimized (Step S330). In the second embodiment, the drive voltage system voltage VH at which the loss is minimized is determined with respect to the torque commands Tm1* and Tm2* and the rotation speeds Nm1 and Nm2 of the motors MG1 and MG2 by experiment or the like in advance and is stored as a target voltage setting map, and the drive voltage system voltage VH derived from the map based on the torque commands Tm1* and Tm2* and the rotation speeds Nm1 and Nm2 of the motors MG1 and MG2 is set as the target voltage VH*.

After the target voltage VH* is set, the target voltage VH* is limited to a component-protecting upper-limit voltage Vlim (Step S350), and a loss Plos2 corresponding to the target voltage VH* is calculated (Step S360). The component-protecting upper-limit voltage Vlim is determined depending on the temperatures of the motors MG1 and MG2, the temperatures of the inverters 41 and 42, and the like. The component-protecting upper-limit voltage Vlim decreases as the temperatures of the motors MG1 and MG2 and the temperatures of the inverters 41 and 42 increase. In the second embodiment, the loss Plos2 is calculated by determining a relationship between the target voltage VH* and the loss Plos2 by experiment or the like in advance, storing the relationship as a loss setting map, and deriving the corresponding loss from the map when the target voltage VH* is given. The loss Plos2 has a larger value as the target voltage VH* becomes higher.

Subsequently, the required power Pe* is set as a sum of the traveling power Pdrv*, the required charging/discharging power Pb*, the air-conditioning power Pac, and the auxiliary machinery power consumption Ph, and the loss Plos2 (Step S370), the target rotation speed Ne* of the engine 22 as an engine command is set based on the required power Pe* and the optimal operation line (Step S380), and then the routine ends. The target rotation speed Ne* of the engine 22 is transmitted to the engine ECU 24 as described above.

When it is determined in Step S300 that the estimated amount Qpm of deposited PM of the PM filter 25 is equal to or greater than the prescribed amount Qref of deposited PM, it is determined whether the filter temperature Tf which is an estimated temperature of the PM filter 25 is lower than the regenerable temperature Tfref (Step S310). When it is determined that the filter temperature Tf is equal to or higher than the regenerable temperature Tfref, a process of regenerating the PM filter 25 is started (Step S320), the target voltage VH* which is a target value of the voltage of the drive voltage system power line 54a is set such that the loss is minimized (Step S330), the processes of Steps S350 to S380, and then the routine ends. The process of regenerating the PM filter 25 is the same as described above.

When it is determined in Step S310 that the filter temperature Tf is lower than the regenerable temperature Tfref, the target voltage VH* is set to a maximum voltage Vmax (Step S340), the processes of Steps S350 to S380 are performed, and then the routine ends. Here, the maximum voltage Vmax is a maximum voltage to which the boosting is allowed by the boost converter 56 (in other words, the maximum voltage Vmax is a maximum voltage to which the voltage is allowed to be increased by the boost converter 56). As described above, since the loss Plos2 increases as the target voltage VH* increases, the required power Pe* that should be output from the engine 22 becomes greater as compared to a case in which the target voltage VH* is set to a voltage at which the loss is minimized, and thus it is possible to rapidly increase the temperature of the PM filter 25. In this case, since the battery 50 is charged/discharged with the required charging/discharging power Pb* based on the difference ΔSOC between the state of charge SOC and the target state of charge SOC* of the battery 50, the battery 50 is not excessively charged. Accordingly, it is possible to suppress occurrence of a situation where the output of the engine 22 is limited due to a decrease in the input power limit Win of the battery 50 caused by an increase in the state of charge SOC of the battery 50.

In the above-mentioned hybrid vehicle 120 according to the second embodiment, when the amount Qpm of deposited PM is equal to or greater than the prescribed amount Qref of deposited PM and the temperature Tf of the PM filter 25 is lower than the regenerable temperature Tfref, the target voltage VH* is set to the maximum voltage Vmax. The target voltage VH* may be regarded as a "target voltage at a high-voltage side of a boost circuit". The loss Plos2 corresponding to the target voltage VH* is calculated, and the loss Plos2 is added to calculate the required power Pe* that should be output from the engine 22. Accordingly, the required power Pe* that should be output from the engine 22 can be set to be greater than that in a normal state (i.e., the required power Pe* can be set to be greater than that at a time when the target voltage VH* is set to a voltage at which the loss is minimized), and thus, the temperature of the PM filter 25 can be rapidly increased. Further, since the battery 50 is charged/discharged with the required charging/discharging power Pb* based on the state of charge SOC, the battery 50 is not excessively charged. Accordingly, it is possible to suppress occurrence of a situation where the output of the engine 22 is limited due to a decrease in the input power limit Win of the battery 50 caused by an increase in the state of charge SOC of the battery 50. As a result, it is possible to suppress a decrease in opportunities to regenerate the PM filter 25.

In the hybrid vehicle 120 according to the second embodiment, when the amount Qpm of deposited PM is equal to or greater than the prescribed amount Qref of deposited PM and the temperature Tf of the PM filter 25 is lower than the regenerable temperature Tfref, the target voltage VH* is set to the maximum voltage Vmax. However, the target voltage VH* may be set to a voltage higher than the voltage at which the loss is minimized, and lower than the maximum voltage Vmax.

In the hybrid vehicle 120 according to the second embodiment, when the amount Qpm of deposited PM is equal to or greater than the prescribed amount Qref of deposited PM and the temperature Tf of the PM filter 25 is lower than the regenerable temperature Tfref, the target voltage VH* is set to the maximum voltage Vmax and the loss Plos2 corresponding to the target voltage VH* is added to calculate the required power Pe* that should be output from the engine 22. However, the required power Pe* may be further increased. In this case, the battery 50 is charged with excessive power, but charging power becomes less than that at a time when the target voltage VH* is set to the voltage at which the loss is minimized (i.e., charging power becomes less than that in a normal state). Accordingly, since the state of charge SOC of the battery 50 increases more slowly than in the normal state, the input power limit Win of the battery 50 decreases more slowly, and thus, limiting of the output of the engine 22 can be more delayed. As a result, it is possible to suppress a decrease in opportunities to regenerate the PM filter 25.

While the hybrid vehicle 20 according to the first embodiment and the hybrid vehicle 120 according to the second embodiment have been described above, the engine command calculating routine illustrated in FIG. 3 and the engine command calculating routine illustrated in FIG. 5 may be combined. That is, when the amount Qpm of deposited PM is equal to or greater than the prescribed amount Qref of deposited PM and the temperature Tf of the PM filter 25 is lower than the regenerable temperature Tfref, the carrier frequency finv of the inverters 41 and 42 and the carrier frequency fcon of the boost converter 56 may be set to be higher than those in a normal state, and further, the target voltage VH* may be set to a voltage higher than the voltage at which the loss is minimized.

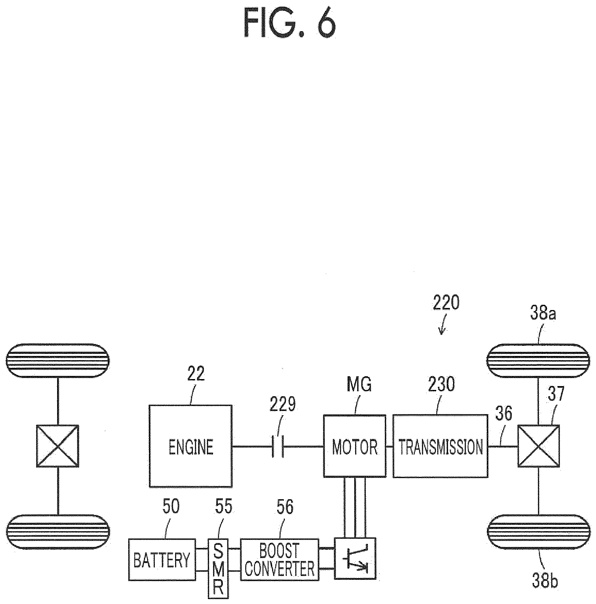

In the hybrid vehicle 20 according to the embodiment, the ring gear of the planetary gear 30 and the motor MG2 are connected to the drive shaft 36 connected to the driving wheels 38a and 38b, and the motor MG1 and the engine 22 are connected to the sun gear and the carrier of the planetary gear 30, respectively. However, any configuration may be employed as long as the configuration includes an engine in which a particulate matter removing filter configured to remove particulate matter is provided in an exhaust system, a motor configured to receive and output power, a driving circuit configured to drive a motor, and an electric power storage device that is connected to the driving circuit. For example, as in a hybrid vehicle 220 according to a modified example illustrated in FIG. 6, the invention may be applied to the hybrid vehicle 220 in which a motor MG is connected to a drive shaft 36 connected to driving wheels 38a and 38b via a transmission 230 and an engine 22 is connected to the motor MG via a clutch 229.

In the hybrid vehicle 20 according to the embodiment, the battery 50 is connected to the battery voltage system power line 54b. However, a capacitor may be connected to the battery voltage system power line 54b, instead of the battery 50.

In the embodiments, the PM filter 25 may be regarded as a "particulate matter removing filter", the engine 22 may be regarded as an "engine", the motor MG1 and the motor MG2 may be regarded as a "motor", the inverters 41 and 42 and the boost converter 56 may be regarded as a "driving circuit", the battery 50 may be regarded as an "electric power storage device", and the HVECU 70, the engine ECU 24, the motor ECU 40, and the battery ECU 52 may be regarded as a "control unit."

While the embodiments of the invention have been described above, the invention is not limited to the embodiments. The invention can be implemented in various embodiments without departing from the scope of the invention.

The invention can be applied to, for example, industries for manufacturing hybrid vehicles.

## Claims

1. A hybrid vehicle comprising:
an engine (22) in which a particulate matter removing filter (25) configured to remove particulate matter is disposed in an exhaust system;
a motor configured to receive and output power;
a driving circuit configured to drive the motor;
an electric power storage device (50) that is connected to the driving circuit; and
a control unit configured to control the engine (22) and the driving circuit, wherein
the control unit is configured, when a high temperature request for increasing a temperature of the particulate matter removing filter (25) to a prescribed value or higher is issued, to control the driving circuit such that a loss of the driving circuit increases and to control the engine (22) such that power greater than power when the high temperature request is not issued is output from the engine (22).

2. The hybrid vehicle according to claim 1, wherein:
the driving circuit includes an inverter (41, 42); and
the control unit is configured to increase the loss of the driving circuit by increasing a carrier frequency of the inverter (41, 42).

3. The hybrid vehicle according to claim 1 or 2, wherein:
the driving circuit includes a boost circuit (56) configured to increase a voltage of electric power from the electric power storage device (50);
the control unit is configured to increase the loss of the driving circuit by increasing a carrier frequency of the boost circuit (56).

4. The hybrid vehicle according to claim 3, wherein the control unit is configured to increase the loss of the driving circuit by increasing a target voltage at a high-voltage side of the boost circuit (56).

5. The hybrid vehicle according to claim 1 or 2, wherein:
the driving circuit includes a boost circuit (56) configured to increase a voltage of electric power from the electric power storage device (50); and
the control unit is configured to increase the loss of the driving circuit by increasing a target voltage at a high-voltage side of the boost circuit (56).
